(19) Europäisches Patentamt
European Patent Office
Office européen des brevets

(11) **EP 1 926 236 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(51) Int Cl.:
*H04B 17/00* (2006.01)    *G08B 29/00* (2006.01)

(21) Anmeldenummer: **06124729.2**

(22) Anmeldetag: **24.11.2006**

(54) **Verfahren und Einrichtung zur Abschätzung der Zuverlässigkeit einer Funkverbindung**

Method and apparatus for estimating the reliability of a radio link

Procédé et dispositif pour estimer la fiabilité d'une liaison radio

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**28.05.2008 Patentblatt 2008/22**

(73) Patentinhaber: **Siemens Aktiengesellschaft 80333 München (DE)**

(72) Erfinder: **Vollenweider, Walter 6312 Steinhausen (CH)**

(56) Entgegenhaltungen:
**EP-A1- 0 729 124**    **WO-A-02/052792**
**US-A- 5 669 063**

- **HANDFORTH M ET AL: "Statistical characterization of the indoor mobile radio channel at 946 MHz" UNIVERSAL PERSONAL COMMUNICATIONS, 1993. PERSONAL COMMUNICATIONS: GATEWAY TO THE 21ST CENTURY. CONFERENCE RECORD., 2ND INTERNATIONAL CONFERENCE ON OTTAWA, ONT., CANADA 12-15 OCT. 1993, NEW YORK, NY, USA,IEEE, Bd. 2, 12. Oktober 1993 (1993-10-12), Seiten 955-959, XP010198258 ISBN: 0-7803-1396-8**

**Beschreibung**

Die vorliegende Erfindung betrifft ein Verfahren und eine Einrichtung zur Abschätzung der Zuverlässigkeit einer Funkverbindung in einem Gebäude zwischen einem Sender und einem Empfänger.

Ein solches verfahren ist aus der Veröffentlichung "Statistical Characterisation of the Indoor Mobile Radio Channel at 946 MHz", Universal Personal Communications, 1993, 2nd International Conference on Personal Communications, Ottawa,Ont.Canada,12-15 Oct.1993,Bd 2,12.Oktober 1993, Seiten 955-959,ISBN:0-7803-1396-8, von Martin Handforth, Asrar U. Sheikh und Majid Abdi bekannt. Dabei wird sowohl durch Angleichen von Kurvenscharen gemäß verschiedenen Modellen als durch eine für die erwünschte Zuverlässigkeit statistisch signifikante Zahl an Messungen aufwendig die Zuverlässigkeit für in einem Gebäude bewegbare Telefongeräte ermittelt. Insbesondere lehrt die Veröffentlichung nicht, Messwertinformationen in einzelnen Eingangssignalpegel zusammenzufassen oder durch Extrapolierung eine Zuverlässigkeit abzuschätzen.

Bei Verwendung einer Funkverbindung in einer Gefahrenmeldeanlage muss deren Zuverlässigkeit besonders hohen Ansprüchen genügen, wobei es aber nicht möglich ist, die Ausfallwahrscheinlichkeit der Funkverbindung bei Inbetriebnahme der Anlage auch nur einigermassen verlässlich zu bestimmen.

Die hohen Anforderungen einer Gefahrenmeldeanlage sind in EP-AI-0729124 angedeutet worden. Auch dieses Dokument zeigt nicht, Messwertinformationen in einzelnen Eingangssignalpegel zusammenzufassen oder durch Extrapolierung eine Zuverlässigkeit abzuschätzen.

Ein Funksignal wird zwischen Sender und Empfänger wegen der Entfernung zum Sender und wegen Materie, die durchdrungen werden muss, abgeschwächt. Diese Abschwächung ist konstant und kann ermittelt werden, indem beispielsweise das Funksignal in der Umgebung des Empfängers gemessen und gemittelt wird. Zusätzlich treten aber noch von der Zeit abhängige Schwankungen auf, die als Schwund oder Fading bezeichnet werden und deren Ursachen vielfältig sind und kaum vorher gesagt werden können. Eine häufige Ursache von Fading in einem Gang oder allgemein in einem Raum sind durch den Gang oder Raum gehende Personen. Grundsätzlich können aber alle Phänomene, die einen Einfluss auf die Geometrie und den Inhalt des Gebäudes haben, Fading verursachen, also beispielsweise Erwärmung oder Abkühlung des Gebäudes, was zur Folge hat, dass sich dieses ausdehnt oder zusammenzieht, Öffnen und Schliessen von Fenstern und Türen, Bewegung eines Lifts usw. Da das vom Empfänger empfangene Signal durch Fading oft sehr stark abfällt, müsste man den Empfänger sehr viel empfindlicher machen als das üblich ist, was aber in vielen Fällen gar nicht möglich ist, wobei aber auch im Falle eines empfindlicheren Empfängers Ausfälle nicht gänzlich ausgeschlossen werden können.

Durch theoretische Überlegungen und Messungen wurde herausgefunden, dass die Ausfallwahrscheinlichkeit im Mittel auf ein Zehntel sinkt, wenn die Empfindlichkeitsschwelle 10 dB tiefer liegt und somit 10 dB mehr Reserve für Fading zur Verfügung steht. Die Steigung der Ausfallwahrscheinlichkeit kann aber auch andere Werte als 10 dB/ Dekade annehmen, was vermutlich von der Art des Gebäudes und der Ausbreitung des Funksignals abhängig ist. Für Sichtverbindungen ist dieser Zusammenhang z.B. aus US-A-5 669 063 bekannt.

Das erfindungsgemässe Verfahren geht von der Erkenntnis aus, dass die Zuverlässigkeit einer Funkverbindung unter anderem von der Streckendämpfung und damit vom empfangenen Signalpegel abhängt. Grundsätzlich kann diese Abhängigkeit der Zuverlässigkeit von der Streckendämpfung leicht festgestellt werden, indem eine genügend grosse Anzahl von Werten des Empfangssignals gemessen wird und diese Werte in Form eines Histogramms angeordnet werden. Wegen der erforderlichen Datenmenge ergeben sich dabei aber in der Praxis erhebliche Schwierigkeiten. Wenn beispielsweise ermittelt werden soll, bei welcher Empfängerempfindlichkeit die Ausfallwahrscheinlichkeit gleich 0,000001 ist, müssen, unter der Annahme, dass für eine einigermassen verlässliche Aussage 10 Ereignisse beobachtet werden müssen, 10 Millionen Ereignisse beobachtet und aufgezeichnet werden. Das ist aber im normalen Betrieb einer Gefahrenmeldeanlage nicht möglich, da nicht genügend Speicherplatz zur Verfügung steht.

Durch die vorliegende Erfindung sollen nun ein Verfahren und eine Einrichtung angegeben werden, mit deren Hilfe aufgrund von während des Betriebs der Anlage gewonnenen Daten die Ausfallwahrscheinlichkeit in einfacher Weise und mit geringem Aufwand vorhergesagt werden kann.

Das erfindungsgemässe Verfahren ist gekennzeichnet durch die folgenden Schritte:

a. Bestimmung der tatsächlichen Empfindlichkeit des Empfängers oder Festlegung der Empfindlichkeit als Erfahrungswert;

b. Bestimmung eines ersten Pegels, der vom Eingangssignal des Empfängers mit einer bestimmten ersten Wahrscheinlichkeit unterschritten wird;

c. Bestimmung eines zweiten Pegels, der vom Eingangssignal des Empfängers mit einer bestimmten zweiten Wahrscheinlichkeit unterschritten wird;

d. Abschätzung der Ausfallwahrscheinlichkeit des Empfängers, mit der das Eingangssignal des Empfängers unter dessen Empfindlichkeit fällt und die Funkverbindung unterbrochen wird, durch eine logarithmische Darstellung des ersten und des zweiten Pegels, der tatsächlichen Empfindlichkeit des Empfängers und der genannten Wahrscheinlichkeiten, wobei die Ausfallwahrscheinlichkeit des Empfängers durch Extrapolation bestimmt wird.

Die Erfindung betrifft weiter eine Einrichtung mit Mitteln zur Durchführung des genannten Verfahrens mit einem Sender und einem Empfänger. Die erfindungsgemässe Einrichtung ist dadurch gekennzeichnet, dass Mittel zur Bestimmung der tatsächlichen Empfindlichkeit des Empfängers oder zu deren Festlegung als Erfahrungswert vorhanden sind, wobei diese Mittel mit dem Empfänger entweder fest oder bei dessen Herstellung oder Prüfung zeitweise verbunden sind, und durch einen mit dem Empfänger fest verbundenen Speicher zur Ablage des ermittelten Werts der Empfindlichkeit.

Da sich die Empfindlichkeit eines sachkundig aufgebauten Empfängers im Betrieb nur unwesentlich verändert und die Ermittlung der tatsächlichen Empfindlichkeit einen grossen Aufwand erfordert, wird die Empfindlichkeit vorzugsweise nicht während des Betriebs bestimmt, sondern bei der Herstellung und Prüfung des Empfängers gemessen und der ermittelte Wert vorzugsweise bereits in logarithmierter Form in einem Schaltungsteil abgespeichert, der dauernd mit dem Empfänger verbunden ist und den Zugriff auf den genannten Wert im Betrieb erlaubt.

Eine bevorzugte Ausführungsform der erfindungsgemässen Einrichtung ist dadurch gekennzeichnet, dass Mittel zur Bestimmung der genannten Pegel, Mittel zur Abschätzung der Ausfallwahrscheinlichkeit des Empfängers und Mittel zur logarithmischen Darstellung des ersten und des zweiten Pegels, der Empfindlichkeit des Empfängers, und der genannten Wahrscheinlichkeiten vorhanden sind, wobei die Ausfallwahrscheinlichkeit des Empfängers durch Extrapolation bestimmt wird.

Die Erfindung betrifft weiter eine Anwendung des genannten Verfahrens in einem Gefahrenmeldesystem mit einer Gefahrenmeldezentrale und peripheren Gefahrenmeldern, wobei die Gefahrenmeldezentrale und die Gefahrenmelder mit Funkmodulen für wechselseitige Funkkommunikation ausgerüstet sind.

Im Folgenden wird die Erfindung anhand des in der einzigen Figur dargestellten Diagramms näher erläutert. Dieses Diagramm zeigt die Abhängigkeit der auf der Abszisse aufgetragenen Ausfallwahrscheinlichkeit von der Empfindlichkeit. Die eingetragenen Bezugszeichen bezeichnen folgende Grössen:

E1: erster Empfangspegel der vom Eingangssignal des Empfängers mit einer bestimmten ersten Wahrscheinlichkeit p1 unterschritten wird;

E2: zweiter Empfangspegel, der vom Eingangssignal des Empfängers mit einer bestimmten zweiten Wahrscheinlichkeit p2 unterschritten wird;

E3: tatsächliche oder als Erfahrungswert festgelegte Empfindlichkeit des Empfängers;

p3: Wahrscheinlichkeit, mit der das Eingangssignal des Empfängers unter dessen Empfindlichkeit (E3) fällt; p3 wird nachfolgend als Ausfallwahrscheinlichkeit des Empfängers bezeichnet.

Zur Abschätzung der Zuverlässigkeit einer Funkverbindung zwischen einem Sender und einem Empfänger wird zuerst die vermutete Gesetzmässigkeit zwischen Ausfallwahrscheinlichkeit und Empfindlichkeit in eine logarithmische Form umgewandelt:

$$20 \log (E1/E2) = S \cdot \log (p1/p2) \qquad\qquad (1)$$

$$S = 20 \log (E1/E2) / \log (p1/p2) \qquad\qquad (2)$$

S bezeichnet die Steigung, von der vermutet wird dass sie im Bereich von 10 dB pro Dekade liegt, die aber nicht bekannt ist.

In einem bestimmten Gebäude haben Messungen folgende Werte ergeben:

$$p1 = 0,5$$

$$E1 = 45 \ dB_{\mu}V$$

$$p2 = 0,01$$

$$E2 = 30dB_\mu V$$

(Wenn die Angabe der Pegel in dB, dBm oder dB$_\mu$V erfolgt, sind die Werte bereits logarithmiert und mit 20 multipliziert.)

$$S = 20 \log (E1/E2)/\log (p1/p2) = 15/1,7 = 8,8 \text{ dB/Dekade}$$

Durch die Messung wird also bestätigt dass S im angenommenen Bereich liegt.

Wenn der Wert von S bekannt ist oder ermittelt wurde, kann die Zuverlässigkeit für eine andere Empfindlichkeitsschwelle E3 extrapoliert werden, wobei grundsätzlich die gleiche Formel gilt, in der E3 die Empfindlichkeitsschwelle des Empfängers und p3 die bei der Empfindlichkeitsschwelle zu erwartende Ausfallwahrscheinlichkeit des Empfängers ist.

$$20 \log (E1/E3) = S \cdot \log (p1/p3) \qquad (3)$$
$$\log (p3) = \log (p1) - [20 \log (E1/E3)]/S \qquad (4)$$
$$p3 = p1 \cdot 10^{- [20 \log (E1/E3)]/S} \qquad (5)$$

Es gilt immer noch

$$p1 = 0,5$$

$$E1 = 45 \text{ dB}_\mu V$$

$$S = 8,8 \text{ dB/Dekade}$$

und es sei E3 = 0 dB$_\mu$V

$$p3 = p1 \cdot 10^{- [20 \log (E1/E3)]/S} = 0,5 \cdot 10^{-45/8,8} = 3,8 \cdot 10^{-6}$$

Wenn S und p3 in einem Rechner mit beschränkter Wortlänge berechnet werden sollen, ist eine lineare Darstellung der Wahrscheinlichkeiten und der Pegel nicht möglich, da der Wertebereich zu gross ist. Es ist zweckmässiger, die Berechnungen mit Werten in logarithmierter Form durchzuführen. Aus Gleichung (2) wird nun Gleichung (6):

$$S = 20 \log (E1/E2) / \log (p1/p2) \qquad (2)$$

$$S = [20 \log (E1) - 20 \log (E2)]/[\log (p1) - \log (p2)] \qquad (6)$$

Ein Empfänger der üblichen Bauart hat einen Ausgang RSSI (Received Signal Strength Indicator), der die Empfangspegel E1 und E2 bereits in logarithmierter Form bereitstellt. p1 und p2 sind vorgegebene Werte, die ebenso gut in logarithmischer Form gegeben sein können. Zur Berechnung von S brauchen somit keine Zahlen logarithmiert zu werden, sondern es müssen nur Subtraktionen und eine Division ausgeführt werden.

Gleichung (4) wird ebenfalls umgeformt und wird zu Glei chung (7):

```
log (p3) = log (p1)-[20 log (E1/E3)]/S              (4)
```

```
log (p3) = log (p1)-[20 log /E1)]/S+[20 log (E3)]/S   (7)
```

Wie bereits erwähnt, kann p1 in bereits logarithmierter Form vorgegeben werden, und E1 ist ein bereits logarithmiertes Signal des Empfängers; E3 ist die Empfindlichkeit des Empfängers. Diese Empfindlichkeit E3 muss entweder als Erfahrungswert in logarithmierter Form vorgegeben werden oder sie wird beim Abgleich des Empfängers bestimmt, in einer externen Einrichtung logarithmiert und in einem Rechner abgespeichert. Somit brauchen zur numerischen Auswertung von Gleichung (7) ebenfalls lediglich Additionen, Subtraktionen und Divisionen ausgeführt zu werden. Das Ergebnis p3 steht in logarithmischer Form zur Verfügung, was aber belanglos ist, da dieser Wert nicht für weitere Berechnungen gebraucht wird sondern nur zur Beurteilung der Qualität einer Funkverbindung dient.

Um die Gleichung (6) auswerten zu können, muss der Wert der Pegel E1 und E2 bekannt sein. E1 entspricht der Empfindlichkeit des Empfängers, die erforderlich ist, damit die Ausfallwahrscheinlichkeit p1 wird. In gleicher Weise entspricht E2 der Empfindlichkeit des Empfängers, die für eine Ausfallwahrscheinlichkeit p2 erforderlich ist. E1 und E2 können nicht direkt bestimmt sondern müssen mit statistischen Methoden ermittelt werden. Wenn nach den üblichen Methoden der Statistik vorgegangen wird, wird der Wert des Eingangssignals genügend häufig gemessen. Diese Werte werden nach der Grösse geordnet. Die gesamte Anzahl der Messwerte wird mit der Ausfallwahrscheinlichkeit p1 multipliziert und ergibt die Anzahl der Messwerte, die unterhalb der Empfindlichkeitsschwelle E1 liegen dürfen, damit die gegebene Wahrscheinlichkeit p1 gerade erreicht wird. Von den gesamten Messwerten werden ausgehend vom kleinsten Wert so viele aussortiert, dass ihre Zahl gerade der durch Multiplikation mit p1 ermittelten Zahl entspricht. Von den übrig gebliebenen Messwerten ist der kleinste gerade derjenige, der gleich der Empfindlichkeitsschwelle E1 ist. Zur Bestimmung von E2 mit p2 wird in gleicher Weise vorgegangen.

In dem in der Zeichnung dargestellten Diagramm ist E1 gleich 45 dB$_\mu$V, E2 ist gleich 30 dB$_\mu$V, p1 ist 0,5 und p2 ist 0,01. Diese beiden Punkte werden durch eine Gerade verbunden, deren Steigung S in diesem Fall gleich 8,8 dB/Dekade beträgt. Wenn andere Werte für E1 und E2 bestimmt wurden, kann die Steigung S aber auch andere Werte annehmen. Die durch die Punkte E1 und E2 gelegte Gerade wird dann verlängert bis sie auf der Höhe von E3 = 0 dB$_\mu$V ist. An dieser Stelle kann der Wert von p3 abgelesen werden.

Bei einer Versuchsreihe wurden etwa 1'000 Messwerte gemessen, wobei der kleinste Messwert 26 dB$_\mu$V und der grösste Messwert 48 dB$_\mu$V betragen hat. Diese Messwerte werden nach der Grösse geordnet. Wenn p1 gleich 0,5 sein soll, werden 500 Messwerte ausgehend von 26 dB$_\mu$V aussortiert. Es werden 500 Messungen mit Werten grösser als 44 oder 45 dB$_\mu$V übrig bleiben. E1 liegt somit im Bereich zwischen 44 und 45 dB$_\mu$V.

Für p2 wurde 0,01 vorgegeben. Somit werden nur die zehn kleinsten Messwerte ausgehend von 26 dB$_\mu$V aussortiert, wobei Messwerte im Bereich von 26 dB$_\mu$V bis ungefähr 30 dB$_\mu$V nicht berücksichtigt werden. Somit ist E2 gleich 30 dB$_\mu$V.

Um die Operation zur Bestimmung von E1 und E2 durchführen zu können, sind mindestens 1'000 Speicherplätze erforderlich und wenn die Werte mit weniger Rechenleistung sortiert werden sollen, ist sogar die doppelte Anzahl von Speicherplätzen erforderlich, wobei aber kleine und preisgünstige Rechner nicht die erforderliche Anzahl von Speicherplätzen aufweisen. Um E1 und E2 mit weniger Aufwand an Speicherplatz zu bestimmen, wird bei Beginn ein Erfahrungswert für E1 gespeichert; der Wert des ersten Registers ist R1. Wenn das empfangene Signal grösser ist als R1, wird zu R1 eine Konstante K1, die mit p1 multipliziert wird, addiert. Wenn hingegen das empfangene Signal kleiner ist als R1, wird von R1 der Wert K1 · (1-p1) subtrahiert. Ebenso ist ein zweites Register mit dem Wert R2 vorhanden, zu dem in gleicher Weise entweder K2 · p2 hinzu gezählt oder K2 · (1-p2) subtrahiert wird.

Nach genügend langer Zeit nimmt R1 den tatsächlichen Wert von E1 an, weil nämlich dann der Wert des Eingangssignals mit der Wahrscheinlichkeit p1 unterhalb von R1 liegt. Somit wird mit der Wahrscheinlichkeit p1 der Wert K1 · (1-p1) weg gezählt. Wenn n Messwerte verarbeitet werden, ist der gesamte Wert, der im Mittel weg gezählt wird gleich n · p1 · K1 · (1-p1). Ebenso wird mit der Wahrscheinlichkeit (1-p1) der Wert p1 hinzu gezählt. Der gesamte Wert, der im Mittel hinzu gezählt wird, ist n · (1-p1) · K1 · p1. Die beiden Werte sind gleich, so dass im Mittel der Wert von R1 erhalten bleibt. In gleicher Weise wird mit einem zweiten Register für E2 verfahren, dessen Wert gleich R2 ist, so dass nach genügend langer Zeit R2 zu E2 wird. Das gerade beschriebene Verfahren mit den Registerwerten R1 und R2 benötigt wesentlich mehr Zeit als das auf der Sortierung der Messwerte beruhende Verfahren. Wenn die beschriebenen Messungen in einer in Betrieb befindlichen Anlage durchgeführt werden, ist diese Zeit vorhanden. Dafür benötigt aber das gerade beschriebene Verfahren nur zwei Speicherplätze.

Der mit Hilfe des beschriebenen Verfahrens ermittelte Wert der Ausfallwahrscheinlichkeit p3 des Empfängers kann in vielfältiger Weise nutzbringend verwendet werden:

- p3 kann dazu dienen, nach Errichtung einer Gefahrenmeldeanlage die Zuverlässigkeit einer Funkverbindung zu beurteilen und zu überprüfen, ob die Anlage den gestellten Anforderungen entspricht.

- Wenn sich die Verhältnisse im Gebäude ändern, kann p3 dazu dienen, zu erkennen, wenn eine Funkverbindung nicht mehr die geforderte Zuverlässigkeit erreicht.

- Mit Hilfe von p3 kann erkannt werden, wenn die Sendeleistung zu gross und die Zuverlässigkeit besser als nötig ist. In diesem Fall kann die Sendeleistung reduziert werden um die Belastung der Umwelt gering zu halten.

- Mit Hilfe von p3 kann die Zuverlässigkeit einer Funkverbindung gezielt erhöht werden, indem die Bandbreite und damit die Datenrate verkleinert wird.

- Wenn mehrere gleichwertige Funkverbindungen vorhanden sind und der entsprechende Wert für jede Verbindung gesondert bestimmt wird, kann mit Hilfe von p3 die zuverlässigste Funkverbindung ausgewählt werden.

- p3 kann verwendet werden, um grundsätzliche Erkenntnisse über die Zuverlässigkeit von Funkverbindungen in Gebäuden zu erhalten.

Bei Anwendung des beschriebenen Verfahrens in einem Gefahrenmeldesystem verhält es sich in der Regel so, dass das Gefahrenmeldesystem über eine Zentrale und eine Mehrzahl von peripheren Gefahrenmeldern verfügt, zwischen denen eine wechselseitige Funkverbindung besteht. Das bedeutet, dass einerseits die Gefahrenmelder ihre Alarmsignale über diese Funkverbindung an die Zentrale melden und dass andererseits die Zentrale bestimmte Signale, beispielsweise zur Parametrierung der Gefahrenmelder, an diese über die Funkverbindung abgibt. Zu diesem Zweck sind sowohl die Zentrale auch die Gefahrenmelder mit einem Funkmodul zum wechselseitigen Funkverkehr ausgerüstet.

Bei einer ersten bevorzugten Anwendung ermittelt die Einrichtung während einer bestimmten Zeit nach der Inbetriebnahme den Wert von p3 und zeigt an, wenn die Zuverlässigkeit nicht den Vorgaben entspricht so dass geeignete Massnahmen ergriffen werden können. Bei einer zweiten bevorzugten Anwendung ermittelt die Einrichtung während des Betriebs dauernd den Wert von p3 und zeigt an, wenn die Zuverlässigkeit nicht den Vorgaben entspricht, so dass geeignete Massnahmen ergriffen werden können.

Die Einrichtung kann so ausgebildet sein, dass der Wert von p3 ermittelt wird und selbsttätig geeignete Massnahmen ergriffen werden, wenn die Zuverlässigkeit nicht den Vorgaben entspricht, indem beispielsweise die Sendeleistung oder die Modulation oder die Betriebsfrequenz verändert wird.

Zusätzlich oder alternativ ermittelt die Einrichtung den Wert von p3 und zeigt diesen an oder erlaubt es mit einer zusätzlichen Vorrichtung, beispielsweise einer Einrichtung zur Datenübertragung oder einem mobilen Datenspeicher, diesen Wert einer fachkundigen Person zur Kenntnis zu bringen, die entscheiden kann, ob der Wert von p3 innerhalb der Vorgaben liegt oder ob Massnahmen zu ergreifen sind, mit denen der Wert wieder innerhalb der Vorgaben gebracht werden kann.

## Patentansprüche

1. Verfahren zur Abschätzung der Zuverlässigkeit einer Funkverbindung in einem Gebäude zwischen einem Sender und einem Empfänger, **gekennzeichnet durch** die folgenden Schritte:

   a. Bestimmung der tatsächlichen Empfindlichkeit (E3) des Empfängers oder Festlegung dieser Empfindlichkeit (E3) als Erfahrungswert;
   b. Bestimmung eines ersten Pegels (E1), der vom Eingangssignal des Empfängers mit einer bestimmten ersten Wahrscheinlichkeit (p1) unterschritten wird;
   c. Bestimmung eines zweiten Pegels (E2), der vom Eingangssignal des Empfängers mit einer bestimmten zweiten Wahrscheinlichkeit (p2) unterschritten wird;
   d. Abschätzung der Ausfallwahrscheinlichkeit (p3) des Empfängers, mit der das Eingangssignal des Empfängers unter dessen Empfindlichkeit (E3) fällt und die Funkverbindung unterbrochen wird, **durch** eine logarithmische Darstellung des ersten und des zweiten Pegels (E1 bzw. E2), der tatsächlichen Empfindlichkeit (E3) des Empfängers und der genannten Wahrscheinlichkeiten (p1, p2, p3), wobei die Ausfallwahrscheinlichkeit (p3) des Empfängers **durch** Extrapolation bestimmt wird.

**2.** Verfahren nach Anspruch 1, **dadurch gekennzeichnet, dass** die Bestimmung des ersten und des zweiten Pegels (E1 bzw. E2) durch Aufzeichnung der Pegel des Eingangssignals über einen genügend langen Zeitraum und Sortierung der Werte nach der Signalstärke erfolgt und ein Histogramm aufgestellt wird, und dass ausgehend vom kleinsten aufgezeichneten Signalwert eine Anzahl von Signalwerten entfernt wird, wobei diese Anzahl dem Produkt aus der gesamten Anzahl der aufgezeichneten Signalwerte und der ersten und zweiten Wahrscheinlichkeit (p1 bzw. p2) entspricht, und dass der kleinste verbleibende Signalwert dem gesuchten Pegel (E1, E2) entspricht.

**3.** Verfahren nach Anspruch 1, **dadurch gekennzeichnet, dass** die Bestimmung des ersten Pegels (E1) **dadurch** erfolgt, dass in einem ersten Register ein zweckmässiger erster Anfangswert geladen, dass bei Überschreiten des Wertes des Registers durch das Eingangssignal zum Registerwert ein Produkt aus einer Konstanten und der ersten Wahrscheinlichkeit (p1) addiert und bei Unterschreiten des Wertes des Registers durch das Eingangssignal vom Registerwert ein Produkt aus der genannten Konstanten und dem Wert 1 minus der ersten Wahrscheinlichkeit (p1) subtrahiert wird, dass diese Schritte so lange vorgenommen werden bis der Wert des Registers einen stabilen Wert angenommen hat, worauf der erste Registerwert als erster Pegel (E1) verwendet wird.

**4.** Verfahren nach Anspruch 3, **dadurch gekennzeichnet, dass** die Bestimmung des zweiten Pegels (E2) in analoger Weise wie die des ersten Pegels (p1) mit einem in einem zweiten Register geladenen zweckmässigen zweiten Anfangswert erfolgt.

**5.** Verfahren nach einem der Ansprüche 1 bis 4, **dadurch gekennzeichnet, dass** die Extrapolation für die Bestimmung der Ausfallwahrscheinlichkeit (p3) des Empfängers in logarithmischer Darstellung eine lineare Extrapolation ist.

**6.** Verfahren nach einem der Ansprüche 1 bis 4, **dadurch gekennzeichnet, dass** zusätzlich zu den Werten für den ersten Pegel (E1) und die erste Wahrscheinlichkeit (p1) und den zweiten Pegel (E2) und die zweite Wahrscheinlichkeit (p2) weitere Pegel bestimmt werden, die vom Eingangssignal mit weiteren Wahrscheinlichkeiten unterschritten werden, und dass die Extrapolation für die Bestimmung der Ausfallwahrscheinlichkeit (p3) des Empfängers **dadurch** erfolgt, dass durch die vom ersten Pegel (E1) und der ersten Wahrscheinlichkeit (p1), vom zweiten Pegel (E2) und der zweiten Wahrscheinlichkeit (p2) und von den weiteren Pegeln und den weiteren Wahrscheinlichkeiten gebildeten Punkte entweder eine Gerade gelegt oder eine Kurve höherer Ordnung verwendet wird.

**7.** Verfahren nach einem der Ansprüche 1 bis 6, **dadurch gekennzeichnet, dass** die Ausfallwahrscheinlichkeit (p3) des Empfängers mit einem vorgegebenen Wert verglichen wird, und dass bei Über- oder Unterschreitung dieses vorgegebenen Wertes Massnahmen ergriffen werden.

**8.** Verfahren nach Anspruch 7, **dadurch gekennzeichnet, dass** bei Unterschreitung des genannten vorgegebenen Wertes die Sendeleistung der Funkverbindung verringert wird.

**9.** Verfahren nach Anspruch 7, **dadurch gekennzeichnet, dass** bei Überschreitung des genannten vorgegebenen Wertes entweder die Bandbreite des Empfängers und/oder die übertragene Datenrate verringert, oder zusätzlich eine geeignete Codierung verwendet, oder die Sendeleistung erhöht oder eine andere geeignete Massnahme ergriffen wird.

**10.** Einrichtung mit Mitteln zur Durchführung des Verfahrens nach einem der Ansprüche 1 bis 9, mit einem Sender und einem Empfänger, **dadurch gekennzeichnet, dass** Mittel zur Bestimmung der tatsächlichen Empfindlichkeit (E3) des Empfängers oder zu deren Festlegung als Erfahrungswert vorhanden sind, wobei diese Mittel mit dem Empfänger entweder fest oder bei dessen Herstellung oder Prüfung zeitweise verbunden sind, und durch einen mit dem Empfänger fest verbundenen Speicher zur Ablage des ermittelten Werts der Empfindlichkeit.

**11.** Einrichtung nach Anspruch 10, mit einem Sender und einem Empfänger, **dadurch gekennzeichnet, dass** Mittel zur Bestimmung der genannten Pegel (E1, E2), Mittel zur Abschätzung der Ausfallwahrscheinlichkeit (p3) des Empfängers und Mittel zur logarithmischen Darstellung des ersten und des zweiten Pegels (E1 bzw. E2), der Empfindlichkeit (E3) des Empfängers und der genannten Wahrscheinlichkeiten (p1, p2, p3) vorhanden sind, wobei die Ausfallwahrscheinlichkeit (p3) des Empfängers durch Extrapolation bestimmt wird.

**12.** Einrichtung nach Anspruch 10 oder 11, **dadurch gekennzeichnet, dass** Mittel vorgesehen sind, welche den Wert der Ausfallwahrscheinlichkeit (p3) des Empfängers einer fachkundigen Person zur Kenntnis bringen, indem der Wert der genannten Wahrscheinlichkeit (p3) angezeigt wird, oder indem eine Vorrichtung zur Datenübertragung vorgesehen ist, oder indem eine Vorrichtung vorgesehen ist, die es erlaubt einen mobilen Datenträger anzuschliessen und den Wert der genannten Wahrscheinlichkeit (p3) auf diesem Datenträger abzuspeichern.

**13.** Anwendung des Verfahrens nach einem der Ansprüche 1 bis 9 in einem Gefahrenmeldesystem mit einer Gefahrenmeldezentrale und peripheren Gefahrenmeldern, wobei die Gefahrenmeldezentrale und die Gefahrenmelder mit Funkmodulen für wechselseitige Funkkommunikation ausgerüstet sind.

**14.** Anwendung nach Anspruch 13, **dadurch gekennzeichnet, dass** nach Inbetriebnahme des Gefahrenmeldesystems alle Funkverbindungen während einer bestimmten Zeit überwacht werden und der extrapolierte Wert für die Ausfallwahrscheinlichkeit (p3) des Empfängers für jede Funkstrecke mit einem vorgegebenen Wert verglichen wird, und dass die Unterschreitung des vorgegebenen Werte durch den genannten extrapolierten Wert bei einer oder mehreren Funkstrecken in geeigneter Weise angezeigt wird.

**15.** Anwendung nach Anspruch 13 oder 14, **dadurch gekennzeichnet, dass** während des Betriebs des Gefahrenmeldesystems eine oder mehrere Funkverbindungen dauernd überwacht werden und der extrapolierte Wert für die Ausfallwahrscheinlichkeit (p3) des Empfängers für jede Funkstrecke mit einem vorgegebenen Wert verglichen wird, und dass die Unterschreitung des vorgegebenen Werte durch den genannten extrapolierten Wert bei einer oder mehreren Funkstrecken in geeigneter Weise angezeigt wird.

**16.** Anwendung nach einem der Ansprüche 13 bis 15, **dadurch gekennzeichnet, dass** während des Betriebs des Gefahrenmeldesystems eine oder mehrere Funkverbindungen dauernd überwacht werden und der extrapolierte Wert für die Ausfallwahrscheinlichkeit (p3) des Empfängers für jede Funkstrecke mit einem vorgegebenen Wert verglichen wird, und dass bei Über- oder Unterschreitung des vorgegebenen Wertes durch den genannten extrapolierten Wert bei einer oder mehreren Funkstrecken selbsttätig Massnahmen ergriffen werden, die geeignet sind den Wert der genannten Ausfallwahrscheinlichkeit (p3) wieder in den vorgegebenen Bereich zu bringen.

**17.** Anwendung nach Anspruch 16, **dadurch gekennzeichnet, dass** die genannten Massnahmen eine Veränderung der Sendeleistung oder der Modulation oder der Betriebsfrequenz umfassen.

**18.** Anwendung nach Anspruch 17, **dadurch gekennzeichnet, dass** die ermittelten und übertragenen Werte der Ausfallwahrscheinlichkeit (p3) des Empfängers mit vorgegebenen Werten verglichen werden und dass geeignete Massnahmen ergriffen werden, falls die ermittelten Werte nicht mit den vorgegebenen Werten übereinstimmen.

**Claims**

**1.** Method for estimating the reliability of a radio link in a building between a transmitter and a receiver, **characterised by** the following steps:

    a. determining the actual sensitivity (E3) of the receiver or specifying said sensitivity (E3) as an empirical value;
    b. determining a first level (E1) which is undershot by the input signal of the receiver with a specific first probability (p1);
    c. determining a second level (E2) which is undershot by the input signal of the receiver with a specific second probability (p2);
    d. estimating the failure probability (p3) of the receiver with which the input signal of the receiver will fall below the sensitivity (E3) thereof and the radio link will be interrupted by means of a logarithmic representation of the first and second level (E1 and E2 respectively), the actual sensitivity (E3) of the receiver and the cited probabilities (p1, p2, p3), wherein the failure probability (p3) of the receiver is determined by extrapolation.

**2.** Method according to claim 1, **characterised in that** the first and second level (E1 and E2 respectively) are determined by recording the levels of the input signal over a sufficiently long period of time and sorting the values according to the signal strength and a histogram is set up, and **in that** starting from the smallest recorded signal value a number of signal values are removed, with said number corresponding to the product of the total number of recorded signal values and the first and second probability (p1 and p2 respectively), and **in that** the smallest remaining signal value corresponds to the level (E1, E2) sought.

**3.** Method according to claim 1, **characterised in that** the first level (E1) is determined **in that** an advantageous first initial value is loaded in a first register, **in that** if the value of the register is exceeded by the input signal a product of a constant and the first probability (p1) is added to the register value and if the value of the register is undershot by the input signal a product of the said constant and the value 1 minus the first probability (p1) is subtracted from the register value, **in that** these steps are performed repeatedly until the value of the register has assumed a stable value, whereupon the first register value is used as the first level (E1).

4. Method according to claim 3, **characterised in that** the second level (E2) is determined in an analogous manner to that of the first level (p1) using an advantageous second initial value loaded in a second register.

5. Method according to one of claims 1 to 4, **characterised in that** the extrapolation for determining the failure probability (p3) of the receiver in a logarithmic representation is a linear extrapolation.

6. Method according to one of claims 1 to 4, **characterised in that** in addition to the values for the first level (E1) and the first probability (p1) and for the second level (E2) and the second probability (p2) further levels are determined which are undershot by the input signal with further probabilities, and **in that** the extrapolation for determining the failure probability (p3) of the receiver is performed either by drawing a straight line through the points formed by the first level (E1) and the first probability (p1), by the second level (E2) and the second probability (p2) and by the further levels and the further probabilities or a higher-order curve is used.

7. Method according to one of claims 1 to 6, **characterised in that** the failure probability (p3) of the receiver is compared with a predefined value, and **in that** measures will be initiated if said predefined value is exceeded or undershot.

8. Method according to claim 7, **characterised in that** if the said predefined value is undershot the transmission power of the radio link will be reduced.

9. Method according to claim 7, **characterised in that** if the said predefined value is exceeded either the bandwidth of the receiver and/or the transmitted data rate will be reduced, or in addition a suitable coding scheme will be used, or the transmission power will be increased or another suitable measure will be initiated.

10. Apparatus having means for performing the method according to one of claims 1 to 9, comprising a transmitter and a receiver, **characterised in that** means are present for determining the actual sensitivity (E3) of the receiver or for specifying said sensitivity as an empirical value, wherein said means are either permanently connected to the receiver or are connected temporarily during its manufacture or testing, and by a memory permanently connected to the receiver for the purpose of storing the determined sensitivity value.

11. Apparatus according to claim 10, comprising a transmitter and a receiver, **characterised in that** means for determining the said levels (E1, E2), means for estimating the failure probability (p3) of the receiver and means for logarithmically representing the first and second level (E1 and E2 respectively), the sensitivity (E3) of the receiver and the said probabilities (p1, p2, p3) are present, wherein the failure probability (p3) of the receiver is determined by extrapolation.

12. Apparatus according to claim 10 or 11, **characterised in that** means are provided which bring the value of the failure probability (p3) of the receiver to the attention of a professionally competent person **in that** the value of the said probability (p3) is signalled, or **in that** a device for data transmission is provided, or **in that** a device is provided which permits a portable data medium to be connected and the value of the said probability (p3) to be stored on said data medium.

13. Use of the method according to one of claims 1 to 9 in a hazard warning system comprising a hazard warning centre and peripheral hazard warning units, wherein the hazard warning centre and the hazard warning units are equipped with radio modules for bidirectional radio communication.

14. Use according to claim 13, **characterised in that** after the hazard warning system has been placed into operation all the radio links are monitored over a specific period of time and the extrapolated value for the failure probability (p3) of the receiver for each radio hop is compared with a predefined value, and **in that** the undershooting of the predefined value by the said extrapolated value in the case of one or more radio hops is signalled in an appropriate manner.

15. Use according to claim 13 or 14, **characterised in that** during the operation of the hazard warning system one or more radio links are continuously monitored and the extrapolated value for the failure probability (p3) of the receiver for each radio hop is compared with a predefined value, and **in that** the undershooting of the predefined value by the said extrapolated value in the case of one or more radio hops is signalled in an appropriate manner.

16. Use according to one of claims 13 to 15, **characterised in that** during the operation of the hazard warning system one or more radio links are continuously monitored and the extrapolated value for the failure probability (p3) of the receiver for each radio hop is compared with a predefined value, and **in that** if the predefined value is exceeded or undershot by the said extrapolated value in the case of one or more radio hops measures will automatically be initiated that are suitable for bringing the value of the said failure probability (p3) back into the predefined range.

17. Use according to claim 16, **characterised in that** the said measures include changing the transmission power or the modulation or the operating frequency.

18. Use according to claim 17, **characterised in that** the determined and transmitted values for the failure probability (p3) of the receiver are compared with predefined values and **in that** suitable measures will be initiated if the determined values do not tally with the predefined values.

**Revendications**

1. Procédé pour estimer la fiabilité d'une liaison radio dans un bâtiment entre un émetteur et un récepteur, **caractérisé par** les étapes suivantes :

   a. détermination de la sensibilité effective (E3) du récepteur ou fixation de cette sensibilité (E3) en tant que valeur empirique ;
   b. détermination d'un premier niveau (E1) qui est dépassé par le bas par le signal d'entrée du récepteur avec une première probabilité déterminée (p1) ;
   c. détermination d'un deuxième niveau (E2) qui est dépassé par le bas par le signal d'entrée du récepteur avec une deuxième probabilité déterminée (p2) ;
   d. estimation de la probabilité de défaillance (p3) du récepteur, avec laquelle le signal d'entrée du récepteur tombe en dessous de la sensibilité de celui-ci (E3) et la liaison radio est interrompue, par une représentation logarithmique du premier et du deuxième niveau (E1 resp. E2), de la sensibilité effective (E3) du récepteur et desdites probabilités (p1, p2, p3), la probabilité de défaillance (p3) du récepteur étant déterminée par extrapolation.

2. Procédé selon la revendication 1, **caractérisé en ce que** la détermination du premier et du deuxième niveau (E1 resp. E2) s'effectue par enregistrement des niveaux du signal d'entrée sur une période suffisamment longue et par tri des valeurs selon l'intensité du signal et un histogramme est établi et **en ce que**, partant de la plus petite valeur de signal enregistrée, un nombre de valeurs de signal est éliminé, ce nombre correspondant au produit du nombre total des valeurs de signal enregistrées et des première et deuxième probabilités (p1 resp. p2) et **en ce que** la plus petite valeur de signal restante correspond au niveau recherché (E1, E2).

3. Procédé selon la revendication 1, **caractérisé en ce que** la détermination du premier niveau (E1) est effectuée par chargement d'une première valeur initiale pertinente dans un premier registre, **en ce que**, au dépassement par le haut de la valeur du registre par le signal d'entrée, un produit d'une constante et de la première probabilité (p1) est additionné à la valeur du registre et, au dépassement par le bas de la valeur du registre par le signal d'entrée, un produit de ladite constante et de la valeur 1 moins la première probabilité (p1 est soustrait de la valeur du registre, et **en ce que** ces étapes sont effectuées jusqu'à ce que la valeur du registre ait pris une valeur stable, suite à quoi la première valeur du registre est utilisée en tant que premier niveau (E1).

4. Procédé selon la revendication 3, **caractérisé en ce que** la détermination du deuxième niveau (E2) s'effectue de manière analogue à celle du premier niveau (p1) avec une deuxième valeur initiale pertinente chargée dans un deuxième registre.

5. Procédé selon l'une des revendications 1 à 4, **caractérisé en ce que** l'extrapolation pour la détermination de la probabilité de défaillance (p3) du récepteur en représentation logarithmique est une extrapolation linéaire.

6. Procédé selon l'une des revendications 1 à 4, **caractérisé en ce que** sont déterminés, en plus des valeurs du premier niveau (E1) et de la première probabilité (p1) et du deuxième niveau (E2) et de la deuxième probabilité (p2), d'autres niveaux qui sont dépassés par le bas avec d'autres probabilités par le signal d'entrée et **en ce que** l'extrapolation pour la détermination de la probabilité de défaillance (p3) du récepteur s'effectue par le fait que les points formés par le premier niveau (E1) et la première probabilité (p1), par le deuxième niveau (E2) et la deuxième probabilité (p2) et par les autres niveaux et des autres probabilités forment une droite ou qu'est utilisée une courbe d'ordre supérieur.

7. Procédé selon l'une des revendications 1 à 6, **caractérisé en ce que** la probabilité de défaillance (p3) du récepteur est comparée avec une valeur donnée et **en ce que** des mesures sont prises au dépassement de cette valeur donnée par le haut ou par le bas.

8. Procédé selon la revendication 7, **caractérisé en ce qu'**il y a réduction de la puissance d'émission de la liaison radio au dépassement de ladite valeur donnée par le bas.

9. Procédé selon la revendication 7, **caractérisé en ce que**, au dépassement de ladite valeur donnée par le haut, il y a réduction de la largeur de bande du récepteur et/ou du débit de données transmis ou, additionnellement, utilisation d'un codage approprié, ou augmentation de la puissance d'émission ou prise d'une autre mesure appropriée.

10. Dispositif avec des moyens pour exécuter le procédé selon l'une des revendications 1 à 9, avec un émetteur et un récepteur, **caractérisé par** la présence de moyens pour déterminer la sensibilité effective (E3) du récepteur ou pour fixer celle-ci en tant que valeur empirique, ces moyens étant reliés au récepteur soit fixement soit temporairement lors de la fabrication ou du contrôle de celui-ci, et par une mémoire reliée fixement au récepteur pour déposer la valeur de la sensibilité qui a été déterminée.

11. Dispositif selon la revendication 10, avec un émetteur et un récepteur, **caractérisé par** la présence de moyens de détermination desdits niveaux (E1, E2), des moyens d'estimation de la probabilité de défaillance (p3) du récepteur et des moyens pour la représentation logarithmique du premier et du deuxième niveau (E1 resp. E2), de la sensibilité (E3) du récepteur et desdites probabilités (p1, p2, p3), la probabilité de défaillance (p3) du récepteur étant déterminée par extrapolation.

12. Dispositif selon la revendication 10 ou 11, **caractérisé en ce que** sont prévus des moyens qui informent un professionnel de la valeur de la probabilité de défaillance (p3) du récepteur par signalisation de la valeur de ladite probabilité (p3) ou par le fait qu'un dispositif de transmission de données est prévu ou par le fait qu'est prévu un dispositif qui permet de raccorder un support de données mobile et de sauvegarder sur ce support de données la valeur de ladite probabilité (p3).

13. Application du procédé selon l'une des revendications 1 à 9 dans un système avertisseur de danger avec une centrale d'avertissement de danger et des avertisseurs de danger périphériques, la centrale d'avertissement de danger et les avertisseurs de danger étant équipés de modules radio aux fins de la communication radio réciproque.

14. Application selon la revendication 13, **caractérisée en ce que**, après la mise en service du système avertisseur de danger, toutes les liaisons radio sont surveillées pendant un temps déterminé et la valeur extrapolée de la probabilité de défaillance (p3) du récepteur est, pour chaque trajet radio, comparée avec une valeur donnée et **en ce que** le dépassement par le bas de la valeur donnée par ladite valeur extrapolée dans le cas d'un ou de plusieurs trajets radio est signalé de manière appropriée.

15. Application selon la revendication 13 ou 14, **caractérisée en ce que**, pendant le fonctionnement du système avertisseur de danger, une ou plusieurs liaisons radio sont surveillées en permanence et la valeur extrapolée de la probabilité de défaillance (p3) du récepteur est, pour chaque trajet radio, comparée avec une valeur donnée et **en ce que** le dépassement par le bas de la valeur donnée par ladite valeur extrapolée dans le cas d'un ou de plusieurs trajets radio est signalé de manière appropriée.

16. Application selon l'une des revendications 13 à 15, **caractérisée en ce que**, pendant le fonctionnement du système avertisseur de danger, une ou plusieurs liaisons radio sont surveillées en permanence et la valeur extrapolée de la probabilité de défaillance (p3) du récepteur est, pour chaque trajet radio, comparée avec une valeur donnée et **en ce que**, en cas de dépassement par le haut ou par le bas de la valeur donnée par ladite valeur extrapolée dans le cas d'un ou de plusieurs trajets radio, des mesures sont prises automatiquement, lesquelles sont propres à ramener la valeur de ladite probabilité de défaillance (p3) dans la plage spécifiée.

17. Application selon la revendication 16, **caractérisée en ce que** lesdites mesures incluent une modification de la puissance d'émission ou de la modulation ou de la fréquence de service.

18. Application selon la revendication 17, **caractérisée en ce que** les valeurs déterminées et transmises de la probabilité de défaillance (p3) du récepteur son comparées avec des valeurs données et **en ce que** des mesures appropriées sont prises si les valeurs déterminées ne coïncident pas avec les valeurs données.

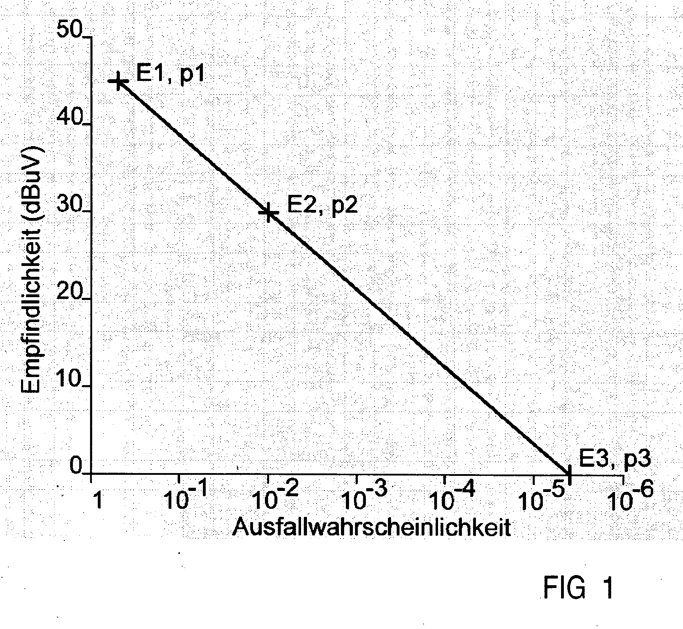

FIG 1

**IN DER BESCHREIBUNG AUFGEFÜHRTE DOKUMENTE**

**In der Beschreibung aufgeführte Patentdokumente**

- EP 0729124 A1

- US 5669063 A

**In der Beschreibung aufgeführte Nicht-Patentliteratur**

- **Martin Handforth ; Asrar U. Sheikh ; Majid Abdi.** Statistical Characterisation of the Indoor Mobile Radio Channel at 946 MHz. *Universal Personal Communications, 1993, 2nd International Conference on Personal Communications, Ottawa, Ont. Canada, 12-15 Oct. 1993,* 12. Oktober 1993, vol. 2, 955-959